# DEMANDE DE BREVET EUROPEEN

(11) **EP 0 688 963 A1**
(43) Date de publication de la demande: **27.12.1995**
(21) Numéro de dépôt: 94401427.3
(22) Date de dépôt: 24.06.1994
(51) Int. Cl.: F16B 13/12

(54) **Cheville de fixation**

(71) Demandeur: PLOMBELEC S.a.r.l., F-45130 Meung-sur-Loire (FR)
(72) Inventeur: Barbotin, Patrick, F-45480 Saint Peravy-Epreux (FR)
(74) Mandataire: Debay, Yves

(57) **Abrégé**

La présente invention concerne une cheville de fixation destinée à rendre solidaire un objet quelconque d'un matériau support préalablement pourvu d'un orifice, ladite cheville comportant des languettes (43) sur les faces intérieures desquelles des bossages (7) faisant saillie à l'intérieur du fût creux de la cheville sont formés pour provoquer l'ouverture des languettes (2,3) par l'action d'une vis (9), d'un clou, d'un organe quelconque sur les bossages (7), caractérisée en ce qu'elle comporte deux paires de languettes (2,3), le sens d'ouverture d'une paire (2) étant opposé au sens d'ouverture de l'autre paire (3) de languettes, le positionnement du bossage (7) d'une languette par rapport aux bossages des autres languettes est étudié pour que l'ouverture des languettes soit décalé dans le temps.

## Description

La présente invention concerne les chevilles de fixation utilisées pour rendre solidaire un objet quelconque d'un matériau support préalablement pourvu d'un orifice permettant la pénétration des dites chevilles.

De nombreux types de chevilles de fixation existent. Ils sont généralement conçus pour s'expanser lors de l'introduction d'une vis.

L'expansion s'obtient par divers procédés tels que des languettes d'ancrage, ou par l'écartement de parties fendues ménagées le long du corps des chevilles, notamment.

Les languettes d'ancrage fonctionnent, selon leur conception, soit sur le principe de la lame de ressort en utilisant les caractéristiques de mémoire élastique des matériaux constitutifs, soit sont repoussées radialement par le passage d'une vis.

Les matériaux constitutifs des supports de chevilles sont de nature très diverses. Il peut s'agir de matériaux creux ou pleins, hétérogènes ou homogènes, friables ou consistants.

De ce fait, les fabricants recherchent, pour des raisons de simplification de la mise en oeuvre, des caractéristiques permettant une utilisation de leurs chevilles avec le plus grand nombre de supports possibles sans qu'il existe aujourd'hui de modèle réellement universel.

D'autre part, les orifices destinés à recevoir les chevilles dans les matériaux décrits auparavant, sont considérés comme conformes à un modèle théorique de section circulaire déterminée et constante.

Dans la réalité, et en fonction des outillages de percussion ou de perçage utilisés pour les réaliser, ou du fait des caractéristiques intrinsèques des matériaux, les orifices présentent très souvent des disparités par rapport à ce modèle. En effet, les orifices en question peuvent être de diamètre supérieur au diamètre préconisé par le fabricant de la cheville, ou ovalisé. Dans ces conditions, la mise en oeuvre s'avère difficile et les qualités de la fixation obtenue sont compromises en ce qui concerne la résistance et sa pérennité, le risque de ruine de l'ouvrage est important.

L'objectif de la présente invention est de permettre la réalisation d'une fixation correcte dans une grande diversité de matériaux de supports, même dans les cas où les orifices de pénétration sont légèrement trop grands ou ovalisés.

A cet effet l'invention a pour objet une cheville de fixation destinée à rendre solidaire un objet quelconque d'un matériau support préalablement pourvu d'un orifice, ladite cheville comportant des languettes sur les faces intérieures desquelles des bossages faisant saillie à l'intérieur du fût creux de la cheville sont formés pour provoquer l'ouverture des languettes par l'action d'une vis, d'un clou, d'un organe quelconque sur les bossages.

La particularité du dispositif selon l'invention tient à au moins deux paires de languettes, le sens d'ouverture d'une paire étant opposé au sens d'ouverture de l'autre paire de languettes, le positionnement du bossage d'une languette par rapport aux bossages des autres languettes est étudié pour que l'ouverture des languettes soit décalé dans le temps.

Cette disposition permet d'exercer des forces opposées sur les parois des orifices de réception des chevilles. La résistance à l'arrachement s'en trouve nettement améliorée, notamment dans le cas de matériaux friables.

Dans le cas d'une languette unique, la particularité du dispositif selon l'invention tient à ses deux parties reliées par une zone d'articulation.

Cette disposition présente, de plus, l'avantage d'augmenter la section de la cheville lors du vissage, lui permettant ainsi d'admettre des tolérances de percement plus large, ou des déformations de la section des orifices.

L'ouverture des languettes est provoquée par l'action d'une vis, d'un clou ou de tout organe pénétrant, sur des bossages faisant saillies à l'intérieur du fût creux de la cheville.

La disposition de ces bossages est telle que les languettes exerçant une pression dans le sens de la pénétration de la cheville, s'ouvrent avec un décalage dans le temps par rapport à celles, dans le sens de l'extraction, exerçant une pression antagoniste.

Selon des modes particuliers de réalisation :
- le fût de la cheville peut être muni d'épaulements ;
- l'extrémité du fût peut être fendue afin de permettre l'expansion radiale des segments constitutifs de cette extrémité ;
- tout, ou partie du fût de la cheville peut recevoir des picots permettant une meilleure adhérence, surtout dans le cas de matériaux pleins tel que du béton;
- la cheville peut présenter à son extrémité supérieure, c'est-à-dire la partie opposée à celle qui est enfoncée la première dans l'orifice, des ailettes anti-rotation ;
- la cheville peut présenter à cette même extrémité supérieure une collerette de rétention ;
- les languettes peuvent être équipées de stries ou de picots, ou de tout élément propre à augmenter leur adhérence.

Le matériau constitutif pourra être une matière plastique appropriée tel que, par exemple, du polyéthylène, mais cela ne doit pas être considéré comme limitatif de l'invention qui pourra également être réalisée avec toute matière, métal ou alliage métallique le permettant.

L'invention sera mieux comprise au cours de la description donnée ci-après, à titre d'exemple purement indicatif et non limitatif, qui permettra d'en dégager les avantages et caractéristiques secondaires.

Il sera fait référence aux dessins annexés dans lesquels :
- la figure 1 représente une vue générale de la cheville ;
- les figures 2 et 3 représentent des vues en coupe de la cheville ;
- la figure 4 représente la section de l'extrémité supérieure de la cheville du côté de l'entrée de la vis ;

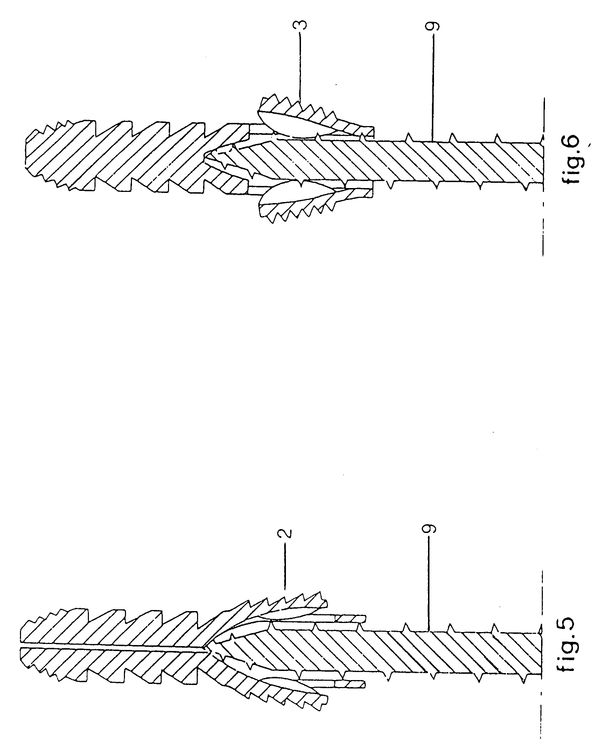

- les figures 5 et 6 présentent l'ouverture des languettes exerçant des forces dans des sens opposés ;
- la figure 7 illustre schématiquement l'état de la cheville après complet vissage en dehors des contraintes liées au matériau support.

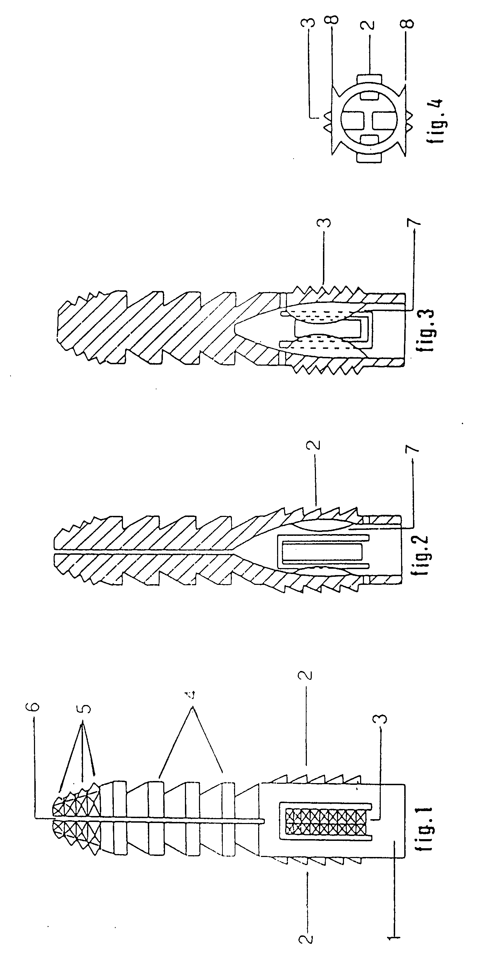

En se reportant à la figure 1, la cheville présente un fût (1) dont la partie supérieure porte deux paires de languettes (2 et 3) opposées et disposées sur des plans perpendiculaires. Ainsi, une paire (2) est disposée dans un plan perpendiculaire par rapport au plan de l'autre paire (3) et chaque languette est reliée par une zone d'articulation au fût (1), ladite zone étant disposée de façon que le sens d'ouverture de deux languettes adjacentes soit opposé.

A la suite de la zone d'implantation des languettes, le fut (1) porte des épaulements (4), l'extrémité inférieure, de forme légèrement conique, présente une zone munie de picots (5). La partie inférieure de la cheville est munie d'une fente (6). La figure 4 montre, de plus, une vue de la section supérieure munie d'ailettes anti-rotation (8) qui assurent le blocage dans le matériau lors du vissage.

De préférence, et tel que représenté sur les figures 2 et 3, le fût (1) présentera un évidement permettant un vissage aisé de la vis (9). Dans cet évidement, les bossages (7) seront positionnés de telle façon que les languettes (2) s'ouvrent en premier lieu.

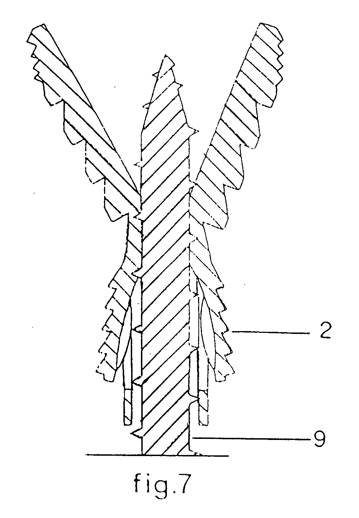

Lors de la poursuite du vissage, les languettes (3) s'ouvriront à leur tour en opposant une grande résistance à tout mouvement rétrograde de la cheville. La forme de la cheville après expansion finale, telle que représentée sur la figure 7 après complet vissage, dépendra de la nature des matériaux supports.

Dans le cas d'un matériau creux, les languettes (3), et les deux parties de l'extrémité inférieure de la cheville, formeront des saillies opposant une excellente résistance à l'arrachement.

Dans le cas d'un matériau plein, la force provoquée par la compression de la matière, le long des parois de l'orifice, sera amplifiée par l'action des picots qui forment autant de crampons s'opposant à l'arrachement.

Bien entendu, la présente invention ne se limite pas aux formes de réalisation présentées, mais englobe toute variante d'exécution et/ou de combinaison de leurs divers éléments. Par exemple, les épaulements (4) positionnés sur le fût de la cheville peuvent recevoir les picots.

Suivant une variante d'exécution, le fût peut comporter deux fentes (6) positionnées de façon perpendiculaire.

Suivant une autre variante, et toujours à titre d'exemple, le fût (1) peut recevoir plusieurs lignes de languettes (2 et 3) exerçant leurs actions à différentes profondeurs de l'orifice.

Enfin, bien qu'il soit prévu de façon préférentielle des languettes distinctement séparées, la réalisation d'une ou plusieurs languettes articulées en leur milieu, et dont les extrémités libres s'ouvriraient en sens inverse, ne sortirait pas du cadre de l'invention.

## Revendications

1. Cheville de fixation destinée à rendre solidaire un objet quelconque d'un matériau support préalablement pourvu d'un orifice, ladite cheville comportant des languettes sur les faces intérieures desquelles des bossages faisant saillie à l'intérieur du fût creux de la cheville sont formés pour provoquer l'ouverture des languettes par l'action d'une vis, d'un clou, d'un organe quelconque sur les bossages, caractérisée en ce qu'elle comporte au moins deux paires de languettes, le sens d'ouverture d'une paire étant opposé au sens d'ouverture de l'autre paire (3) de languettes, le positionnement du bossage d'une languette par rapport aux bossages des autres languettes est étudié pour que l'ouverture des languettes soit décalé dans le temps.

2. Cheville de fixation selon la revendication 1, caractérisée en ce que la disposition des bossages est telle que les languettes exerçant une pression dans le sens de la pénétration des chevilles s'ouvrent avec un décalage dans le temps par rapport à celles exerçant une pression antagoniste.

3. Cheville de fixation selon une des revendications précédentes caractérisée en ce que chaque languette est reliée par une zone d'articulation au fût (1), ladite zone étant disposée de façon que le sens d'ouverture de deux languettes adjacentes soit opposé.

4. Cheville de fixation suivant l'une quelconque des revendications 1 à 3, caractérisée en ce que le fût (1) est muni d'épaulements (4).

5. Cheville de fixation suivant l'une quelconque des revendications 1 à 4, caractérisée en ce que tout ou partie du fût (1) est muni de picots (5) ou d'épaulements (4), ou de languettes (2 et 3).

6. Cheville de fixation suivant l'une quelconque des revendications 1 à 5, caractérisée en ce que les languettes d'ancrage sont munies de stries ou de tout autre dispositif permettant d'améliorer l'adhérence

7. Cheville de fixation suivant l'une quelconque des revendications 1 à 6, caractérisée en ce que l'extrémité supérieure comporte une ou une pluralité d'ailettes anti-rotation (8).

8. Cheville de fixation suivant l'une quelconque des revendications 1 à 7, caractérisée en ce que l'extrémité supérieure est équipée d'une collerette de rétention.

9. Cheville de fixation suivant l'une quelconque des revendications 1 à 8, caractérisée en ce que le fût (1) comporte une ou plusieurs fentes (6).

10. Cheville de fixation suivant l'une quelconque des revendications 1 à 9, caractérisée en ce que les paires de languettes sont opposées et une paire (2) est disposée dans un plan perpendiculaire par rapport au plan de l'autre paire (3).
